# EUROPEAN PATENT SPECIFICATION

(11) **EP 1 949 760 B1**
(45) Date of publication and mention of the grant of the patent: **26.08.2009**
(21) Application number: 05816175.3
(22) Date of filing: 21.10.2005
(51) Int. Cl.: H05B 3/80

(54) **AQUARIUM WATER HEATER**
AQUARIUM-WASSERERWÄRMUNGSVORRICHTUNG
CHAUFFE-EAU D'AQUARIUM

(43) Date of publication of application: 30.07.2008
(73) Proprietor: Mars Fishcare North America, Inc., Chalfont, PA 18914 (US)
(72) Inventor: RENOUD-GRAPPIN, Philippe François, 74370 Metz-Tessy (FR)
(74) Representative: Crowhurst, Charlotte Waveney
(86) International application number: PCT/US2005/038275
(87) International publication number: WO 2007/046813

(56) References cited:
- EP-A- 0 757 507
- US-A- 5 113 057
- US-A- 5 905 849
- US-B1- 6 393 213

## Description

### BACKGROUND OF THE INVENTION

This invention generally relates to water heaters, more particularly, to flow-through water heaters used in aquariums.

Flow-through water heaters used in aquariums are known in the art, see e.g. document EP-A-0 757 507. One conventional flow-through aquarium water heater uses an electrical resistance heating element on an inner tube and is enclosed by an outer tube. Water that flows through the inner tube is sufficiently heated but water making contact with the outer tube is not adequately heated due to insulation between the inner tube and the outer tube. Thus, the outer tube does not conduct sufficient heat to the aquarium water.

Heaters that include thermostats with excess heat protection circuits and indicator lights are also known in the art. An indicator light is lit for high water temperature conditions but no indicator exists for low water temperature conditions. Furthermore, these heaters have no flow through capability and produce less sufficient heating.

A need exists, therefore, for an aquarium water heater with flow-through capabilities and enhanced heat transfer through the external tube. A need also exists for a water temperature monitor even when the heater element is not activated and indicator patterns that differentiate various temperature conditions. The present invention satisfies these needs and provides other advantages and benefits that will be apparent from the following disclosure.

### BRIEF SUMMARY OF THE INVENTION

Briefly stated, the present invention includes, according to claim 1, an aquarium water heater comprising: a hollow heat-conducting internal tube; an electric resistance heater element with electrical connections, the heater element disposed adjacent an outer surface of the hollow heat-conducting internal tube; a temperature thermal cut-out switch electrically connected to the heater element for overheat protection when the temperature of the heater element exceeds a predetermined maximum value; a hollow heat-conducting external tube spaced from and circumscribing the internal tube and the heater element; a heat-conducting, electrically-insulating polymeric filler filling a space between the internal tube and the external tube and sealing the heater element between the internal tube and the external tube; a controller electrically coupled to the heater element to activate and deactivate the heater element; an indicator electrically coupled to and responsive to the controller; and a water temperature sensor electrically coupled to the controller; the water temperature sensor sensing the temperature of water into which the heater is at least partially immersible and providing a corresponding electrical signal to the controller and monitoring the temperature of the water regardless of whether the heater element is activated; the controller activating the heater element when the temperature of the water is below a first predetermined minimum temperature and deactivating the heater element when the temperature of the water is above a first predetermined maximum temperature, and further activating the indicator when the water temperature is below a second predetermined minimum temperature and when the water temperature is above a second predetermined maximum temperature.

### BRIEF DESCRIPTION OF THE SEVERAL VIEWS OF THE DRAWINGS

The foregoing summary, as well as the following detailed description of presently preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

In the drawings:

Fig. 1 is a side perspective view of an aquarium water heater in accordance with one preferred embodiment of the present invention;

Fig. 2 is a front perspective view of the aquarium water heater of Fig. 1;

Fig. 3 is an exploded side elevation view of an internal tube and an external tube of the aquarium water heater in accordance with another preferred embodiment of the present invention;

Fig. 4 is a side elevation view of the internal tube of Fig. 3 with an electric resistance heater element and electrical connections;

Fig. 5 is a side elevation view of the internal tube of Fig. 4 with a thermal cut-out switch and an electrical cord;

Fig. 6 is a top perspective view of a partially assembled aquarium water heater of Fig 5;

Fig. 7 is a partial vertical cross-section view of an aquarium tank showing in side elevation a preferred embodiment of the aquarium water heater connected to an aquarium water filter;

Fig. 8 is a schematic diagram illustrating an electronic circuit used in the aquarium water heater; and

Fig. 9 is a schematic diagram of a printed circuit board used in the aquarium water heater.

### DETAILED DESCRIPTION OF THE INVENTION

Certain terminology is used in the following description for convenience only and is not limiting. The words "right," "left," "upper" and "lower" designate directions in the drawings to which reference is made. The words "inwardly" and "outwardly" refer to directions toward and away from, respectively, the geometric center of the aquarium water heater designated parts thereof. The word "a" is defined to mean "at least one." The terminology includes the words above specifically mentioned, derivatives thereof, and words of similar import.

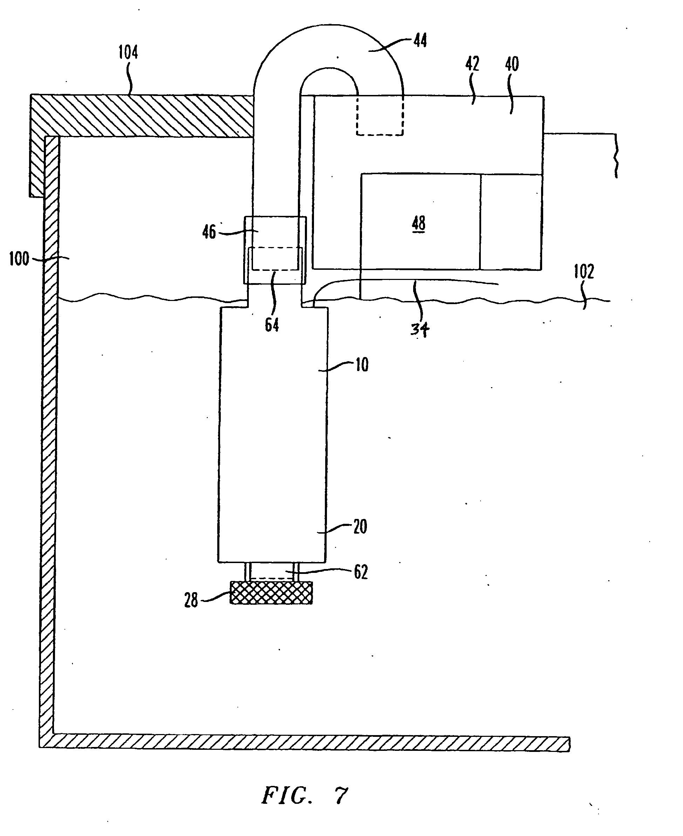

Referring to the drawings in detail, wherein like numerals indicate like elements throughout the figures, there is shown an aquarium water heater, generally designated 10, which is used to heat water within an aquarium. Referring to Fig. 7, the aquarium water heater 10 is adapted for connection to a water inlet line 44 for an aquarium filter water pump 42 within an aquarium 100. Alternatively, the heater 10 could be connected to a water line, such as an inlet line, for a canister-type filter (not shown) preferably for use in an aquarium or for heating water used for other purposes. If desired, the heater could merely be immersed in water 102 in the aquarium 100, and still heat the water 102 effectively.

The aquarium water heater 10 comprises a hollow heat-conducting internal tube 12 with an electric resistance heater element 14 disposed adjacent an outer surface 12a of the hollow heat-conducting internal tube 12. The electric resistance heater element 14 has a first end 14a and a second end 14b that are connected to first and second electrical connections 16a, 16b. A temperature thermal cut-out switch 18 is electrically connected to the heater element 14 for overheat protection when the temperature of the heater element 14 exceeds a predetermined maximum value. A hollow heat-conducting external tube 20 is spaced from and circumscribes the internal tube 12 and the heater element 14. A heat-conducting, electrically insulating polymeric filler 22 fills a space between the internal tube 12 and the external tube 20, sealing the heating element 14 between the internal tube 12 and the external tube 20.

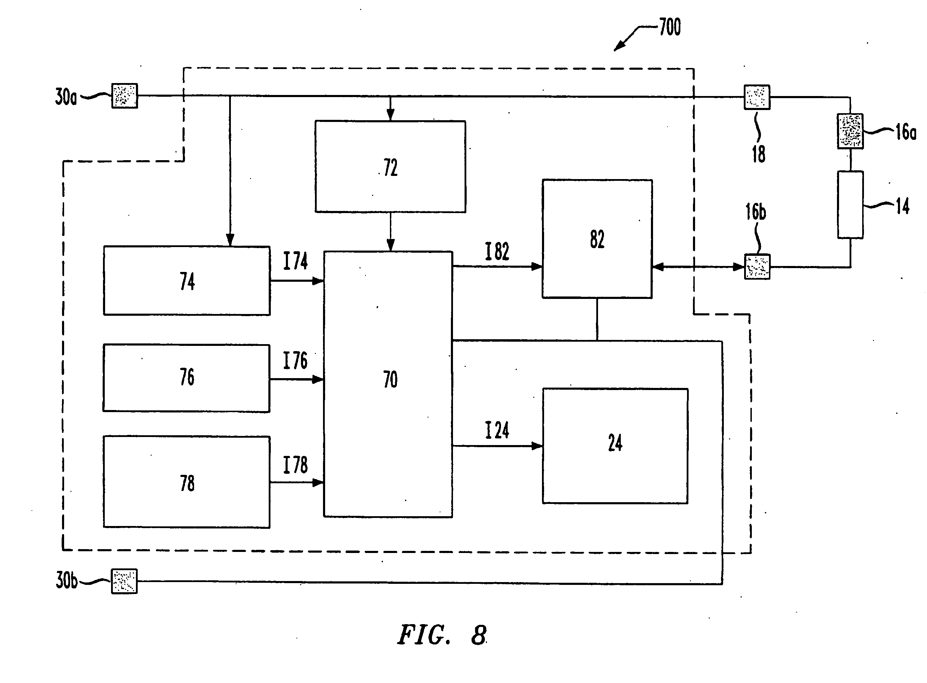

Referring to Figs. 8-9, the aquarium water heater 10 further comprises a control circuit 700. The control circuit 700 includes a water temperature sensor 76 and a controller 70. The controller 70 may be a microcontroller, a microprocessor, an application specific integrated circuit (ASIC), a programmable logic array (PAL) and the like, or may simply be implemented with a variety of discrete electrical and electronic components. The water temperature sensor 76, such as a thermistor, is electrically coupled to the controller 70 to provide an analog input to the controller 70 that corresponds to sensed or measured water temperature. For example, the temperature sensor 76 may provide 0.5 - 4.5 volts DC which corresponds to 20° - 32° C (68° - 90° F). Of course other signals and ranges may be utilized. The control circuit 700 may also include a selectable temperature setpoint input device 78 that provides a temperature setpoint to the controller 70. The selectable temperature setpoint input device 78 may be a potentiometer, a slide-wire, a keypad, a switch and the like. The water temperature sensor 76 senses the temperature of the water into which the heater 10 is at least partially immersible and provides a corresponding electrical signal to the controller 70. The water temperature sensor 76 and associated circuitry monitor the temperature of the water regardless of whether the heater element 14 is activated. The control circuit 700 may also include a switching device 82 coupled to and responsive to the controller 70 to selectively activate the heater element 14 when the temperature of the water falls below a first predetermined minimum temperature and to deactivate the heater element 14 when the temperature of the water exceeds a first predetermined maximum temperature. The control circuit 700 further activates an indicator 24 when the water temperature is below a second predetermined minimum temperature and when the water temperature is above a second predetermined maximum temperature. Preferably, the selectable temperature setpoint input device 78 inputs a signal, analog or digital, which corresponds to a desired temperature setting, such as 26° C (79° F), which the controller 70 can utilize to compare to the actual temperature as sensed by the water temperature sensor 76 for providing the various output controls.

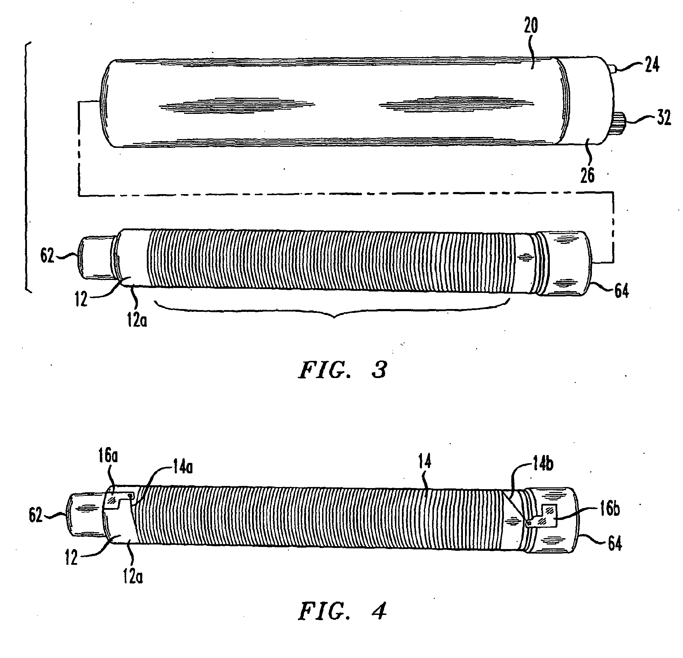

Referring to Figs. 3 through 5, the internal tube 12 has an inlet 62 and an outlet 64. The hollow heat-conducting internal tube 12 is preferably made of a heat-conducting synthetic polymer, such as glass-filled polyamide, glass-filled polybutylene terephthalate (PBT), polyimide, glass-filled polycarbonate, glass-filled polyphenylene sulfide or polytetrafluoroethylene (PTFE), for example. One of ordinary skill in the art would recognize that any other heat-conducting material could be substituted, in view of the present disclosure.

The electric resistance heater element 14 surrounds the internal tube 12. The heater element 14 is preferably wound resistance wire. Preferably, the wire is a cupronickel alloy capable of withstanding up to about 300 watts, although a similarly-rated nickel chrome alloy or a nickel iron alloy are also good choices. Alternatively, the heater element 14 may comprise resistive ink printed on an electrically insulating substrate. In one preferred example of this alternative embodiment, the electrically insulating substrate is polyethylene terephthalate. An example of this alternative form of an electrical resistance heater is disclosed in U.S. Patent 6,393,213, the disclosure of which is hereby incorporated herein by reference. One of ordinary skill in the art would recognize that the electric resistance heater element 14 could be constructed of any electrical resistance material, in view of the present disclosure. A first end 14a and a second end 14b of the wire of the heater element 14 are connected to electrical connections 16a, 16b at or near the inlet 62 and outlet 64, respectively, for connection to a power source. The first and second electrical connections 16a, 16b are preferably adhesively attached to the internal tube 12 by an adhesive and embedded within the polymeric filler 22. Alternatively, the electrical connections may be over-molded with the internal tube 12, unitarily formed with the internal tube 12 or mechanically fixed to the internal tube 12.

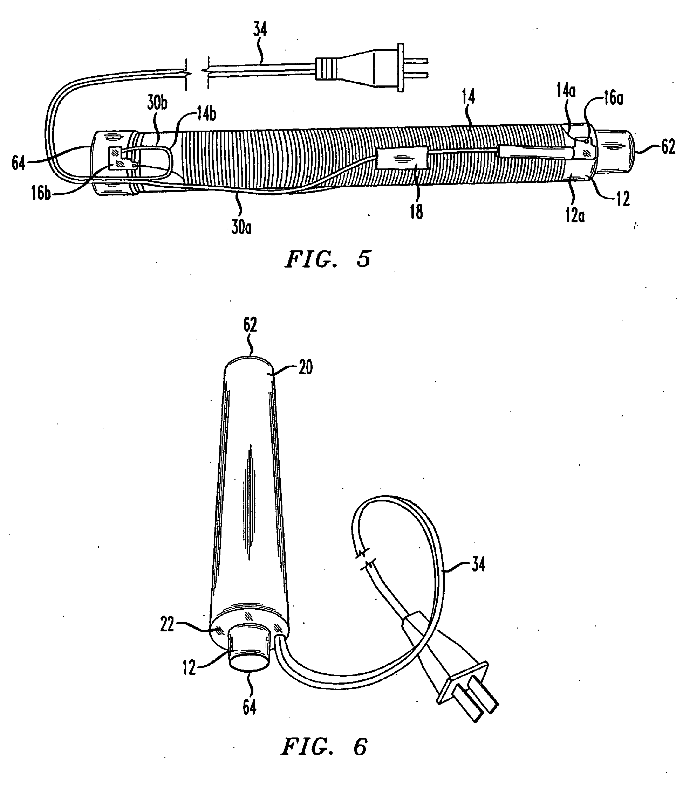

Referring to Figs. 5 and 6, the temperature thermal cut-out switch 18 is preferably a bi-metallic switch and deactivates the heater 10 when the temperature of the heater 10 preferably reaches a temperature at which a user could be burned, or a fire started, especially if the heater is left on but is not immersed in water. A preferred temperature is about 100°C (212°F), and more preferably, about 60 °C (140 °F), since this is low enough to avoid burning users. The temperature thermal cut-out switch 18, which may be made of typical, well-known bi-metallic elements, is electrically connected in series to the hot (line) 30a of the alternating current (AC) power cord 34 and to the electrical connection 16a and is preferably embedded within the polymeric filler 22. One of ordinary skill in the art would recognize in view of the present disclosure that the thermal cut-out switch 18 could have any suitable well-known construction.

The heater 10 is powered by a power supply 30. In the preferred embodiment, the power supply 30 is AC. A hot (line) side 30a of the AC power cord 34 is electrically connected to the first electrical connection 16a via the thermal cut-out switch 18 and a neutral side 30b is connected to the second electrical connection 16b. The AC power cord 34 extends near the outlet 64 from the heater, after having been connected to the connections 16a and 16b via the thermal cut-out switch 18, and then partially embedded in filler 22. One of ordinary skill would recognize, in view of the present disclosure, that the hot (line) side 30a and neutral side 30b could be interchanged without departing from the spirit and scope of the present invention. In an alternate embodiment, electrical power is obtained from a low voltage direct current (DC) power source, which may be from at least one battery, or converted from an AC power source.

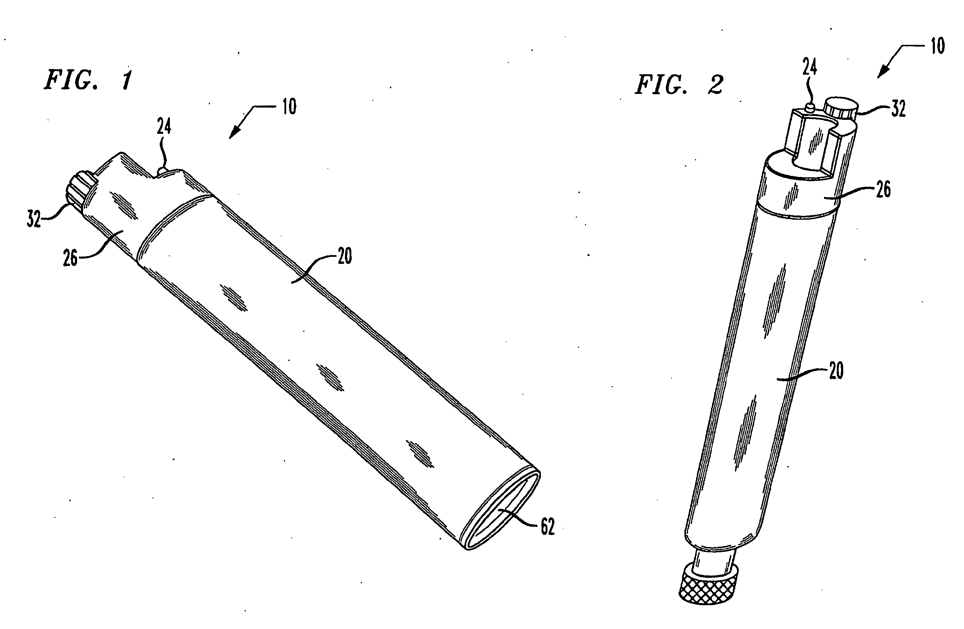

Referring to Figs. 1- 3 and 6, the external tube 20 is preferably made of a synthetic polymer such as glass-filled polyamide, glass-filled polybutylene terephthalate (PBT), polyimide, glass-filled polycarbonate, glass-filled polyphenylene sulfide or polytetrafluoroethylene (PTFE), for example. One of ordinary skill in the art would recognize that any heat-conducting material could be substituted, in view of the present disclosure.

The polymeric filler 22 that fills the space between the tubes 12, 20 is of a heat-conducting, electrically-insulating material, such as polyurethane resin, epoxy resin, which may be filled with inorganic materials, such as sand or glass beads. One of ordinary skill in the art would recognize in view of the present disclosure that any other initially flowable or viscous, curable, heat-conducting encapsulant material could be used for the polymeric filler 22.

Referring to Figs. 1, 2 and 6, the aquarium water heater 10 preferably has a round (circular) transverse cross-section (Fig. 6) or an elliptical transverse cross-section (Figs. 1 and 2), or alternatively has a semi-elliptical or triangular cross-section (not shown). One of ordinary skill in the art would recognize in view of the present disclosure that the water heater 10 could take on any shape so long as water is capable of traveling through the internal tube 12. By having an elliptical cross-section, the effective internal and external surface area is increased, and the heater may be shorter than prior art heaters having the same heating capacity. Flow-through heaters also provide quicker heating than solid heaters, since water is heated both inside, as the water flows through the heater, and outside of the heater.

Referring to Figs. 1, 2 and 9, the control circuit 700 including the water temperature sensor 76, the selectable temperature setpoint input device 78, the indicator 24 and the controller 70, are all enclosed within a housing 26. In the preferred embodiment, the housing 26 is constructed of the same material as the tubes 12, 20 and is sealed water-tight with the internal tube 12 and the external tube 20 for the heater 10 to be at least partially immersible. The housing 26 could also be made of any synthetic polymeric material compatible with water use. Furthermore, it is preferred that the housing 26 has the same transverse cross-sectional shape as the tubes 12, 20.

The water temperature sensor 76 and the controller 70 and associated circuitry monitor the water temperature through the housing 26 regardless of whether the heater element 14 is activated. If desired, the water temperature sensor 76, with or without its associated circuitry, may be located remote from the heater 10 and/or the controller 70 anywhere in the body of water that is being heated. The heater, water temperature sensor 76 and associated circuitry can be electrically connected by appropriate insulated wires. Moreover, the circuitry, if used separately from the water temperature sensor 76 may be removed from the water and hung on the side of the aquarium or other structure containing water. The selectable temperature setpoint input device 78 preferably includes a potentiometer and is adjustable with a temperature adjusting knob 32 located on the exterior of the housing 26. The potentiometer can be replaced by an electronic circuit activated by remote control, in a manner well-known to those skilled in the art. In addition, the selectable temperature setpoint input device 78 causes the controller 70 to activate the heater element 14 when the temperature of the water is below a first predetermined minimum temperature and deactivates the heater element 14 when the temperature of the water is above a first predetermined maximum temperature. Preferably, the first predetermined minimum temperature and the first predetermined maximum temperature are a function of the temperature setpoint, such as being a predetermined amount below and a predetermined amount above the temperature setpoint, respectively. In the preferred embodiment, the first predetermined minimum temperature and the first predetermined maximum temperature are about 0.5° C (0.9° F) below and about 0.5° C (0.9° F) above the temperature setpoint as adjusted by the selectable temperature input device 78 , respectively. While the temperature setpoint can be set at any desired temperature, a typical setting would be one within about 20°C (68°F) to about 32°C (90°F). Alternatively, the temperature setpoint can be programmed at the factory to a desired temperature for a particular application, e.g., a tropical marine fish temperature setting or a fresh water fish temperature setting.

The water temperature sensor 76 and controller 70 further activate the indicator 24 when the water temperature is below a second predetermined minimum temperature and when the water temperature is above a second predetermined maximum temperature. In the preferred embodiment, the indicator 24 is off when the heater is not activated, and is on in an indicating condition when the heater element 14 is activated and is on in a warning condition when the water temperature is below the second predetermined minimum temperature and above the second predetermined maximum temperature. The warning condition should be different than the indicating condition, but both conditions can be based upon the temperature setpoint. Preferably, each of the second predetermined minimum temperature and the second predetermined maximum temperature is a function of the temperature setpoint, such as being a predetermined amount below and a predetermined amount above the temperature setpoint, respectively. It is preferred that the second predetermined minimum temperature and the second predetermined maximum temperature are about 3° C (5.4° F) below and about 3° C (5.4° F) above the temperature setpoint, respectively.

The indicator 24 is preferably a light, and more preferably a light-emitting diode (LED) where the indicating condition is a steady glow of light and the warning condition is a flashing light. Alternatively, more than one indicator, preferably lights and more preferably, LEDs, could be used. For example, an indicator that the heater is on could be a green light or LED and a warning indicator could be a steady or flashing red light or LED. The indicator(s) could also be a buzzer, chime or other audible indicator, or could be a transmitter that sends signals to one or more appropriate receivers located on or preferably remote from the heater.

While the first predetermined minimum and maximum temperatures may be greater or less than about ± 0.5°C (0.9°F) from the temperature setpoint, and the second predetermined minimum and maximum temperature could be greater or less than about ± 3°C (5.4°F), these preferred minimums and maximums allow adequate control of the temperature and protection of aquatic life typically expected to be within the aquarium without excessive cycling of the heater on and off and without generating false positive or negative warning indications. Adjustments to the first and second predetermined minimum and maximum temperatures could be made readily, in view of the present disclosure, to any specific user requirements or to take into consideration the environment and type of aquatic life expected for the aquarium with which the heater of this invention is intended to be used. This could be accomplished, for example, by changing the controller software for any given production series.

Referring to the control circuit 700 illustrated in the schematic diagram of Fig. 8, the heater 10 is controlled by the controller 70, preferably a microcontroller, by processing electrical signals I74, I76, I78 that are input to the controller 70. In the preferred embodiment, the controller 70 has input/output (I/O) and control programming (code) that utilizes a "deadband" or trip-point control scheme. One of ordinary skill in the art would recognize in view of the present disclosure that the controller 70 could implement alternative control schemes such as proportional integral derivative control (PID), time proportioning control or any other control algorithm. The controller 70 preferably is powered by a DC power supply 72. In the preferred embodiment, the DC power supply 72 includes a rectifier that converts AC voltage received from the heater power supply 30 to a predetermined DC voltage needed for the controller 70. It is also preferred that the DC power supply 72 include a voltage regulator in the form of an integrated circuit that provides a stable and clean source of DC power. The load side 30a of the power supply 30 feeds power to the DC supply 72. Furthermore, a power synchronization circuit 74 monitors the load side 30a power and outputs a corresponding electrical signal 174 to the controller 70. In the preferred embodiment, the power synchronization circuit 74 is formed with discrete elements or an integrated circuit. Furthermore, it is preferred that the power synchronization circuit 74 provide switching based on zero-cross phase required to prevent noise and interference in the circuit 700 (i.e., "zero-cross fire"). The temperature sensor 76, which may be a thermistor, outputs an electrical signal 176 corresponding to the temperature of the water in the aquarium. In the preferred embodiment, the thermistor 76 is of an analog type but one of ordinary skill in the art will recognize in view of the present disclosure that other types, such as digital components could be substituted. The selectable temperature setpoint input device 78, which preferably includes a potentiometer, outputs an electrical signal I78 that corresponds to the temperature setpoint. In the preferred embodiment, the electrical signals are analog but one of ordinary skill in the art would recognize in view of the present disclosure that the signals could be of other types such as digital signals. The controller 70 processes the input signals I74, I76, I78 and outputs electrical signals I24, I82 to the indicator 24 and the switching device 82, respectively. As previously mentioned, the indicator 24 is activated corresponding to the different temperature conditions. The switching device 82 receives a digital signal 182 from the microcontroller 70 to determine whether power is relayed to the electric resistance heater element 14. In the preferred embodiment, the switching device 82 is a Triode Alternating Current Switch (TRIAC). One of ordinary skill in the art would recognize that any other semiconductor or electrical switch capable of controlling current could be substituted, in view of the present disclosure. The control circuit 700 in Fig. 8 also shows the thermal cut-out switch 18 that is connected to the heater element 14 previously mentioned. The thermal cut-out switch 18 acts as an over temperature protection device, as well as a safety interlock. The circuit shown in Fig. 8 is completed by connecting the switching device 82 to the neutral side 30b of the power supply 30.

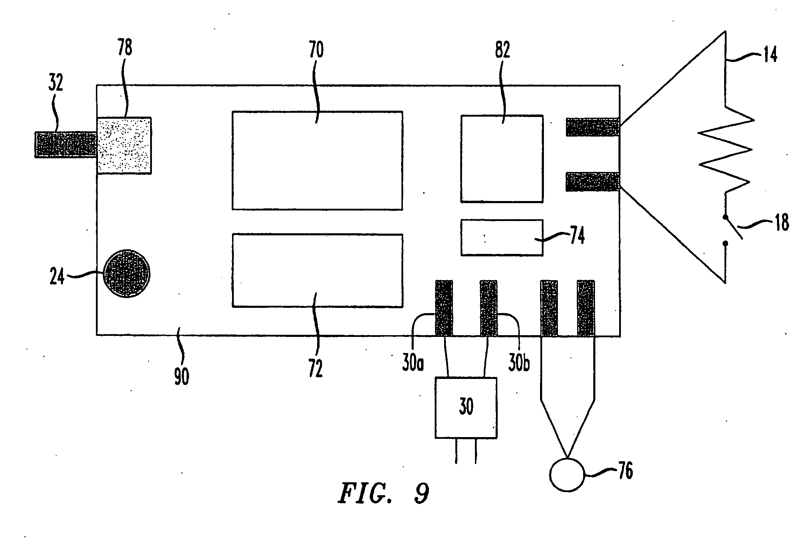

Referring to the schematic diagram of Fig. 9, a printed circuit board 90 is located within the housing 26 and includes circuits for the selectable temperature setpoint input device 78 controlled by a potentiometer circuit, a controller 70, a switching device 82, a temperature sensor 76, a DC power supply 72, a power synchronization circuit 74 and a heater power supply 30. The switching device 82 of the printed circuit board 90 is electrically connected to the heating element 14. The printed circuit board 90 is mounted inside of the housing 26 and is potted or sealed with polyurethane or other suitable resin for waterproofing, anti-corrosion and for safety purposes.

Fig. 7 shows one preferred arrangement for using the heater 10 to heat water 102 in an aquarium 100, though, if desired, the heater could be connected to a water inlet supply tube of a canister filter used in an aquarium or with any other device where heated, filtered water is desired. A cover 104 optionally, but preferably, covers at least a portion of the aquarium. Furthermore, one of ordinary skill in the art will recognize in view of the present disclosure that the water heater 10 could be used either completely submersed or partially submersed in the water 102, without being connected to a filter or to any other water inlet. In that case, the heater can be placed in a vertical position, a horizontal position, or any position between vertical and horizontal. The heater 10 is submersed in the aquarium water 102 and preferably is adapted to be connected to a water line 44 for a water pump 42 of an aquarium water filter assembly 40. Preferably, a coupling device 46 connects the outlet 64 of the heater 10 to the water line 44. If desired, the coupling device 46 could be eliminated and a direct mechanical assembly could connect the heater 10 and the water line 44. A strainer 28 is optionally, but preferably, connected to the inlet 62 of the heater 10 to prevent fish or other animal or plant aquatic life from entering the heater and filter. The filter assembly 40 includes a water pump 42 having a motor 48. Power is supplied to the heater 10 preferably by an AC power source through power cord 34, though other sources of power could also be used, including a battery back-up supply. In the preferred embodiment, the water line 44 is a U-tube but one of ordinary skill in the art would recognize in view of the present disclosure that different sizes and different shapes could be substituted.

In operation, a preferred embodiment of the water heater 10 is placed within an aquarium 100, preferably connected to a filter inlet tube 44 as shown in Fig. 7. The AC power cord 34 is connected to a power source 30 and a desired water temperature is set by a user using the temperature adjusting knob 32 of the assembled water heater 10. So long as the water temperature is below the set temperature the heater 10 is activated with the indicator 24 on in an indicating condition, such as a steady glow of light. The heater continues to heat the water until the water temperature reaches about 0.5° C (0.9°F) above the set temperature, as detected by the temperature sensor 76. When the water temperature reaches about 0.5°C (0.9°F) above the set temperature the microcontroller 70 deactivates the heater 10 and the indicator 24 shuts off. The heater 10 normally remains inactive until the temperature sensor 76 senses that the water temperature is about 0.5°C (0.9°F) below the set temperature at which time the controller 70 causes the heater to activate and the indicator to register an indicating or "on" condition until the temperature sensor 76 senses a water temperature about 0.5° C (0.9°F) above the set temperature. The indicator 24 turns on steadily when the heater is activated and shuts off when the heater is inactive. Thus, the controller 70 is programmed to maintain the water temperature to within about ± 0.5°C (0.9°F) of the set temperature (about -0.5°C (0.9°F) below the set temperature, the first predetermined minimum, to about +0.5°C (0.9°F) above the set temperature, the first predetermined maximum). When the water temperature falls about 3°C (5.4°F) below the set temperature (the second predetermined minimum) or exceeds the set temperature by about 3°C (5.4°F) (the second predetermined maximum), the indicator 24 provides a warning indication, preferably by a light or LED that flashes, until the water temperature falls within about ±3°C (5.4°F) of the set temperature. As mentioned above, the first and second predetermined minimum and maximum temperatures could be adjusted to any specific user requirements, such as by changing the controller software for any given production series.

The warning indicator should be sufficient to alert a user promptly, since temperatures outside of the range of the second predetermined minimum and maximum temperatures could indicate a blockage of water flow through the heater, excessively low or high room temperature, or some defect in the circuitry or other elements, and could be detrimental to aquatic life in the aquarium. Thus, the flashing indicator serves as a warning to check the heater and take appropriate action promptly. Furthermore, the heater element 14 is deactivated by the thermal cut-out switch 18 if the heater element 14 reaches a temperature at which a user could be burned, preferably about 100°C (212°F) and more preferably, about 60°C (140°F), typically if the heater is left plugged in but removed from the aquarium water, or in case of blockage of water flow through the heater, as a safety feature.

Those skilled in the art will appreciate in view of the present disclosure that changes may be made to the embodiment described above without departing from the inventive concept thereof according to the following claims. It is understood, however, that this invention is not limited to the particular embodiment disclosed, but is intended to cover modifications within the scope of the present invention, as described above and the following claims.

## Claims

1. An aquarium water heater (10) comprising:
a hollow heat-conducting internal tube (12);
an electric resistance heater element (14) with electrical connections, the heater element disposed adjacent an outer surface of the hollow heat-conducting internal tube;
a temperature thermal cut-out switch (18) electrically connected to the heater element for overheat protection when the temperature of the heater element exceeds a predetermined maximum value;
a hollow external tube (20) spaced from and circumscribing the internal tube (12) and the heater element (14);
a controller (70) electrically coupled to the heater element to activate and deactivate the heater element;
an indicator (24) electrically coupled to and responsive to the controller; and
a water temperature sensor (76) electrically coupled to the controller, the water temperature sensor sensing the temperature of water into which the heater is at least partially immersible and providing a corresponding electrical signal to the controller and monitoring the temperature of the water regardless of whether the heater element is activated,
the controller (70) activating the heater element when the temperature of the water is below a first predetermined minimum temperature and deactivating the heater element when the temperature of the water is above a first predetermined maximum temperature,
**characterised in that** the hollow external tube (20) is heat-conducting;
a heat-conducting, electrically-insulating polymeric filler (22) fills a space between the internal tube and the external tube and seals the heater element between the internal tube and the external tube;
the controller (70) further activates the indicator (24) when the water temperature is below a second predetermined minimum temperature and when the water temperature is above a second predetermined maximum temperature.

2. An aquarium water heater (10) as in claim 1, wherein the hollow heat-conducting tubes (12,20) are comprised of a synthetic polymer.

3. An aquarium water heater (10) as in claim 2, wherein the synthetic polymer is selected from the group consisting of glass-filled polyamide, glass-filled polybutylene terephthalate, polyimide, glass-filled polycarbonate, glass-filled polyphenylene sulfide and polytetrafluoroethylene.

4. An aquarium water heater as in claim 1, wherein the polymeric filler (22) is selected from the group consisting of polyurethane resin and epoxy resin.

5. An aquarium water heater as in claim 1, wherein the heater element (14) is wound wire, or the heater element comprises resistive ink printed on an electrically insulating substrate.

6. An aquarium water heater as in claim 5, wherein heater element (14) is wound wire and the wire is selected from the group consisting of a cupronickel alloy, a nickel chrome alloy and a nickel iron alloy.

7. An aquarium water heater as in claim 5, wherein heater element (14) comprises restistive ink printed on an electrically insulating substrate and the substrate is polyethylene terephthalate.

8. An aquarium water heater as in claim 1, wherein the indicator (24) is on in an indicating condition when the heater element is activated and in a warning condition when the water temperature is below the second predetermined minimum temperature and above the second predetermined maximum temperature.

9. An aquarium water heater as in claim 1, further comprising a selectable temperature setpoint that is input to the controller (70).

10. An aquarium water heater (10) as in claim 9. wherein the first predetermined minimum temperature and the first predetermined maximum temperature are about 0.5 °C (0.9 °F) below and about 0.5 °C (0.9 °F) above the selectable temperature setpoint, respectively.

11. An aquarium water heater (10) as in claim 9, wherein the second predetermined minimum temperature and the second predetermined maximum temperature are about 3 °C (5.4 °F) below and about 3 °C (5.4 °F) above the selectable temperature setpoint, respectively.

12. An aquarium water heater (10) as in claim 8, wherein the indicator is a light, the indicating condition is a steady glow of the light, and the warning condition is a flashing light.

13. An aquarium water heater (10) as in claim 12, wherein the light is a light-emitting diode.

14. An aquarium water heater (10) as in claim 1, having a cylindrical transverse cross-section, or an elliptical transverse cross-section, or a semi-elliptical transverse cross-section, or a triangular transverse cross-section.

15. An aquarium water heater (10) as in claim 1, further comprising a selectable temperature setpoint input device (78) that provides an adjustable desired setpoint for the controller.

16. An aquarium water heater as in claim 1, wherein the thermal cut-out swith (18) is a bi-metallic switch.

17. An aquarium water heater as in claim 1, wherein the thermal cut-out switch (18) deactivates the heater when the temperature of the heater reaches 100°C (212°F), or the thermal cut-out switch deactivates the heater when the temperature of the heater reaches 60 °C (140 °F).

18. An aquarium water heater as in claim 1, wherein the thermal cut-out switch (18) is embedded within the polymeric filler.

19. An aquarium water heater as in claim 1, wherein the electrical connections are associated with the internal tube (12) by one of unitary formation with the internal tube, by being over-molded with the internal tube, by mechanical attachment with the internal tube and by adhesive attachment to the inner tube by an adhesive embedded within the polymeric filler.

20. An aquarium water heater (10) as in claim 1, wherein electrical power is obtained from an AC power supply, or from at least one battery, or from a low-voltage DC power supply.

21. An aquarium water heater as in claim 1, wherein the heater is adapted for connection to a water line (44) for an aquarium filter water pump (42) by which water flows through the heater from an inlet to an outlet.

22. An aquarium water heater as in claim 21, further comprising a strainer (28) at the heater inlet.

## Patentansprüche

1. Aquarienwasser-Erwärmungsvorrichtung (10) enthaltend:
ein hohles, wärmeleitendes Innenrohr (12);
ein elektrisches Widerstandsheizelement (14) mit elektrischen Anschlüssen,
wobei das Heizelement benachbart zu einer Außenoberfläche des hohlen, wärmeleitenden Innenrohres angeordnet ist;
einen thermischen Temperatur-Unterbrecherschalter (18), der mit dem Heizelement elektrisch verbunden ist, um einen Überhitzungsschutz zu gewährleisten, wenn die Temperatur des Heizelementes einen vorbestimmten Maximalwert überschreitet;
ein hohles Außenrohr (20), das vom Innenrohr (12) und vom Heizelement (14) beabstandet ist und diese umschreibt;
eine Steuereinheit (70), die mit dem Heizelement elektrisch gekoppelt ist, um das Heizelement zu aktivieren und zu deaktivieren;
eine Anzeigeeinrichtung (24), die mit der Steuereinheit verbunden ist und auf diese anspricht; und
einen Wassertemperatursensor (76), der mit der Steuereinheit elektrisch gekoppelt ist, wobei der Wassertemperatursensor die Temperatur des Wassers erfasst, in das die Heizeinrichtung wenigstens teilweise eingetaucht werden kann, und ein entsprechendes elektrisches Signal der Steuereinheit zuführt und die Wassertemperatur unabhängig davon überwacht, ob das Heizelement aktiviert ist,
wobei die Steuereinheit (70) das Heizelement aktiviert, wenn sich die Wassertemperatur unter einer ersten vorbestimmten Minimaltemperatur befindet, und das Heizelement deaktiviert, wenn sich die Wassertemperatur über einer ersten vorbestimmten Maximaltemperatur befindet;
**dadurch gekennzeichnet, dass:**
das hohle Außenrohr (20) wärmeleitend ist;
ein wärmeleitender, elektrisch isolierender Polymerfüllstoff (22) einen Zwischenraum zwischen dem Innenrohr und dem Außenrohr füllt und das Heizelement zwischen dem Innenrohr und dem Außenrohr abdichtet;
und die Steuereinheit (70) weiterhin die Anzeigeeinrichtung (24) aktiviert, wenn die Wassertemperatur unter einer zweiten vorbestimmten Minimaltemperatur ist und wenn die Wassertemperatur über einer zweiten vorbestimmten Maximaltemperatur ist.

2. Aquarienwasser-Erwärmungsvorrichtung (10) nach Anspruch 1, bei der die hohlen, wärmeleitfähigen Rohre (12, 20) aus einem synthetischen Polymer bestehen.

3. Aquarienwasser-Erwärmungsvorrichtung (10) nach Anspruch 2, bei der das synthetische Polymer aus der Gruppe gewählt ist, die aus glasgefülltem Polyamid, glasgefülltem Polybutylen-Terephtalat, Polyimid, glasgefülltem Polycarbonat, glasgefülltem Polyphenylensulfid und Polytetrafluorethylen besteht.

4. Aquarienwasser-Erwärmungsvorrichtung nach Anspruch 1, bei der der Polymerfüllstoff (22) aus der Gruppe gewählt ist, die aus Polyurethanharz und Epoxydharz besteht.

5. Aquarienwasser-Erwärmungsvorrichtung nach Anspruch 1, bei der das Heizelement (14) ein gewundener Draht ist oder das Heizelement eine Widerstandsfarbe ist, die auf ein elektrisch isolierendes Substrat gedruckt ist.

6. Aquarienwasser-Erwärmungsvorrichtung nach Anspruch 5, bei der das Heizelement (14) ein gewundener Draht ist und der Draht aus der Gruppe gewählt ist, die aus einer Kupfernickellegierung, einer Nickelchromlegierung und einer Nickeleisenlegierung besteht.

7. Aquarienwasser-Erwärmungsvorrichtung nach Anspruch 5, bei der das Heizelement (14) eine Widerstandsfarbe enthält, die auf ein elektrisch isolierendes Substrat gedruckt ist, und das Substrat Polyehtylen-Terephtalat ist.

8. Aquarienwasser-Erwärmungsvorrichtung nach Anspruch 1, bei der die Anzeigeeinrichtung (24) in einem Anzeigezustand eingeschaltet ist, wenn das Heizelement aktiviert ist, und sich in einem Warnzustand befindet, wenn die Wassertemperatur unter der zweiten vorbestimmten Minimaltemperatur und über der zweiten vorbestimmten Maximaltemperatur ist.

9. Aquarienwasser-Erwärmungsvorrichtung nach Anspruch 1, weiterhin enthaltend einen wählbaren Temperatursollwert, der in die Steuereinheit (70) eingegeben ist.

10. Aquarienwasser-Erwärmungsvorrichtung (10) nach Anspruch 9, bei der die erste vorbestimmte Minimaltemperatur und die erste vorbestimmte Maximaltemperatur etwa 0,5 °C (0,9 °F) unter bzw. etwa 0,5 °C (0,9 °F) über dem wählbaren Temperatursollwert liegen.

11. Aquarienwasser-Erwärmungsvorrichtung (10) nach Anspruch 9, bei der die zweite vorbestimmte Minimaltemperatur und die zweite vorbestimmte Maximaltemperatur etwa 3 °C (5,4 °F) unter bzw. etwa 3 °C (5,4 °F) über dem wählbaren Temperatursollwert liegen.

12. Aquarienwasser-Erwärmungsvorrichtung (10) nach Anspruch 8, bei der die Anzeigeeinrichtung ein Licht ist, der Anzeigezustand ein ständiges Leuchten des Lichtes ist und der Warnzustand ein blinkendes Licht ist.

13. Aquarienwasser-Erwärmungsvorrichtung (10) nach Anspruch 12, bei der das Licht eine Leuchtdiode ist.

14. Aquarienwasser-Erwärmungsvorrichtung (10) nach Anspruch 1, die einen zylindrischen Querschnitt oder einen elliptischen Querschnitt oder einen halbelliptischen Querschnitt oder einen dreieckigen Querschnitt hat.

15. Aquarienwasser-Erwärmungsvorrichtung (10) nach Anspruch 1, bei der der Thermostat einstellbar ist.

16. Aquarienwasser-Erwärmungsvorrichtung (10) nach Anspruch 1, bei der der thermische Unterbrecherschalter (18) ein Bimetallschalter ist.

17. Aquarienwasser-Erwärmungsvorrichtung nach Anspruch 1, bei der der thermische Unterbrecherschalter (18) die Heizeinrichtung deaktiviert, wenn die Temperatur der Heizeinrichtung 100 °C (212 °F) erreicht, oder der thermische Unterbrecherschalter die Heizeinrichtung deaktiviert, wenn die Temperatur der Heizeinrichtung 60 °C (140 °F) erreicht.

18. Aquarienwasser-Erwärmungsvorrichtung nach Anspruch 1, bei der der thermische Unterbrecherschalter (18) in den Polymerfüllstoff eingebettet ist.

19. Aquarienwasser-Erwärmungsvorrichtung nach Anspruch 1, bei der die elektrischen Anschlüsse mit dem Innenrohr (12) entweder durch gemeinsame Ausbildung mit dem Innenrohr, durch Überguss mit dem Innenrohr, durch mechanische Anbringung am Innenrohr oder durch haftende Anbringung am Innenrohr durch ein Haftmittel verbunden sind, das in den Polymerfüllstoff eingebettet ist.

20. Aquarienwasser-Erwärmungsvorrichtung (10) nach Anspruch 1, bei der die elektrische Energie von einer Wechselstromquelle oder von wenigstens einer Batterie oder von einer Niederspannungs-Gleichstromquelle bezogen wird.

21. Aquarienwasser-Erwärmungsvorrichtung nach Anspruch 1, bei der die Heizeinrichtung für den Anschluss an eine Wasserleitung (44) für eine Aquarienfilterwasserpumpe (42) eingerichtet ist, wodurch Wasser durch die Heizeinrichtung von einem Einlass zu einem Auslass fließt.

22. Aquarienwasser-Erwärmungsvorrichtung nach Anspruch 21, weiterhin enthaltend ein Filtersieb am Einlass der Heizeinrichtung.

## Revendications

1. Chauffage pour aquarium (10) comprenant :
un tube interne creux thermo-conducteur (12) ;
un élément de chauffage à résistance électrique (14) comprenant des connexions électriques, l'élément de chauffage étant disposé de telle sorte qu'il soit adjacent à une surface extérieure du tube interne creux thermo-conducteur ;
un disjoncteur thermique (18) connecté électriquement à l'élément de chauffage pour la protection contre les surchauffes, lorsque la température de l'élément de chauffage dépasse une valeur maximale prédéterminée ;
un tube externe creux (20) disposé autour du tube interne (12) et de l'élément de chauffage (14) en respectant un espace avec le tube interne (12) et l'élément de chauffage (14) ;
un contrôleur (70) couplé électriquement à l'élément de chauffage afin d'activer et de désactiver l'élément de chauffage ;
un indicateur (24) couplé électriquement au contrôleur et réactif au contrôleur ; et
un capteur de température de l'eau (76) couplé électriquement au contrôleur, le capteur de température de l'eau détectant la température de l'eau dans laquelle le chauffage est au moins partiellement immersible, fournissant un signal électrique correspondant au contrôleur et surveillant la température de l'eau que l'élément de chauffage soit activé ou non,
le contrôleur (70) activant l'élément de chauffage lorsque la température de l'eau est inférieure à une première température minimale prédéterminée et désactivant l'élément de chauffage lorsque la température de l'eau est supérieure à une première température maximale prédéterminée,
**caractérisé en ce que** le tube externe creux (20) est thermo-conducteur ;
un matériau de remplissage polymérique thermo-conducteur et électriquement isolant (22) remplit un espace entre le tube interne et le tube externe et isole l'élément de chauffage entre le tube interne et le tube externe ;
le contrôleur (70) active également l'indicateur (24) lorsque la température de l'eau est inférieure à une seconde température minimale prédéterminée et lorsque la température de l'eau est supérieure à une seconde température maximale prédéterminée.

2. Chauffage pour aquarium (10) selon la revendication 1, dans lequel les tubes thermo-conducteurs creux (12, 20) sont en un polymère synthétique.

3. Chauffage pour aquarium (10) selon la revendication 2, dans lequel on choisit le polymère synthétique dans le groupe comprenant la polyamide chargée de fibres de verre, le téréphtalate de polybutylène chargé de fibres de verre, le polyimide, le polycarbonate chargé de fibres de verre, le polysulfure de phénylène et le polytétrafluoroéthylène chargés de fibres de verre.

4. Chauffage pour aquarium selon la revendication 1, dans lequel on choisit le matériau de remplissage polymérique (22) dans le groupe comprenant la résine polyuréthane et la résine époxy.

5. Chauffage pour aquarium selon la revendication 1, dans lequel l'élément de chauffage (14) est un fil conducteur enroulé, ou l'élément de chauffage comprend de l'encre résistive imprimée sur un substrat électriquement isolant.

6. Chauffage pour aquarium selon la revendication 5, dans lequel l'élément de chauffage (14) est un fil conducteur enroulé et on choisit le fil conducteur dans le groupe comprenant un alliage cupronickel, un alliage nickel chrome et un alliage fer nickel.

7. Chauffage pour aquarium selon la revendication 5, dans lequel l'élément de chauffage (14) comprend de l'encre résistive imprimée sur un substrat électriquement isolant et le substrat est en téréphtalate de polyéthylène.

8. Chauffage pour aquarium selon la revendication 1, dans lequel l'indicateur (24) s'allume en cas d'état d'indication lorsque l'élément de chauffage est activé et en cas d'état d'alarme lorsque la température de l'eau est inférieure à la seconde température minimale prédéterminée et supérieure à la seconde température maximale prédéterminée.

9. Chauffage pour aquarium selon la revendication 1, comprenant également un point de consigne de température sélectionnable qui constitue une entrée du contrôleur (70).

10. Chauffage pour aquarium (10) selon la revendication 9, dans lequel la première température minimale prédéterminée et la première température maximale prédéterminée sont à environ 0,5°C (0,9°F) en-dessous et environ 0,5°C (0,9°F) au-dessus du point de consigne de température sélectionnable, respectivement.

11. Chauffage pour aquarium (10) selon la revendication 9, dans lequel la seconde température minimale prédéterminée et la seconde température maximale prédéterminée sont à environ 3°C (5,4°F) en-dessous et environ 3°C (5,4°F) au-dessus du point de consigne de température sélectionnable, respectivement.

12. Chauffage pour aquarium (10) selon la revendication 8, dans lequel l'indicateur est une lumière, l'état d'indication est un scintillement fixe de la lumière, et l'état d'alarme est une lumière clignotante.

13. Chauffage pour aquarium (10) selon la revendication 12, dans lequel la lumière est une diode électroluminescente.

14. Chauffage pour aquarium (10) selon la revendication 1, présentant une coupe transversale cylindrique, ou une coupe transversale elliptique, ou une coupe transversale semi-elliptique, ou une coupe transversale triangulaire.

15. Chauffage pour aquarium (10) selon la revendication 1, comprenant également un dispositif d'entrée d'un point de consigne de température sélectionnable (78) qui fournit un point de consigne ajustable souhaité pour le contrôleur (70).

16. Chauffage pour aquarium selon la revendication 1, dans lequel le disjoncteur thermique (18) est un interrupteur bilame.

17. Chauffage pour aquarium selon la revendication 1, dans lequel le disjoncteur thermique (18) désactive le chauffage lorsque la température du chauffage atteint 100°C (212°F), ou le disjoncteur thermique désactive le chauffage lorsque la température du chauffage atteint 60°C (140°F).

18. Chauffage pour aquarium selon la revendication 1, dans lequel le disjoncteur thermique (18) est intégré dans le matériau de remplissage polymérique.

19. Chauffage pour aquarium selon la revendication 1, dans lequel les connexions électriques sont associées au tube interne (12) par l'un des moyens suivants : par formation unitaire avec le tube interne, par surmoulage avec le tube interne, par solidarité mécanique avec le tube interne et par solidarité adhésive avec le tube interne grâce à un adhésif intégré dans le matériau de remplissage polymérique.

20. Chauffage pour aquarium (10) selon la revendication 1, dans lequel on obtient la puissance électrique grâce à une source d'alimentation alternative, ou à partir d'au moins une batterie, ou à partir d'une source d'alimentation continue basse tension.

21. Chauffage pour aquarium selon la revendication 1, dans lequel le chauffage est adapté pour être connecté à une conduite d'eau (44), pour une pompe à eau de filtration d'aquarium (42) par laquelle l'eau passe à travers le chauffage d'une entrée à une évacuation.

22. Chauffage pour aquarium selon la revendication 21, comprenant également un pré-filtre (28) en entrée du chauffage.
